# EUROPEAN PATENT SPECIFICATION

(11) **EP 4 011 815 B1**
(45) Date of publication and mention of the grant of the patent: **02.07.2025**
(21) Application number: 21210283.4
(22) Date of filing: 24.11.2021
(51) Int. Cl.: B66B 1/46, B66B 5/00

(54) **PASSENGER GROUPING FOR ELEVATORS**
PASSAGIERGRUPPIERUNG FÜR AUFZÜGE
REGROUPEMENT DE PASSAGERS POUR ASCENSEURS

(30) Priority: 14.12.2020 US 202017120606
(43) Date of publication of application: 15.06.2022
(73) Proprietor: Otis Elevator Company, Farmington, Connecticut 06032 (US)
(72) Inventor: MIRIYALA, Pradeep, 500081 Hyderabad (IN)
(74) Representative: Dehns

(56) References cited:
- CN-A- 111 392 526
- CN-A- 112 061 902
- JP-B2- 6 610 671

## Description

### TECHNICAL FIELD

The present disclosure relates generally to elevator systems, and more specifically to passenger grouping in elevator systems.

### BACKGROUND

In today's environment, travel for business and personal reasons are very common, and the travelers can encounter many others in a short period of time. Because travelers can easily travel to limitless destinations, if an individual has a communicable health condition such as a virus or infection, several other individuals may become exposed. The risk of unknowingly spreading the virus or infection can be undesirably increased. There may be a need to mitigate the risk of coming in contact with others that may have been potentially exposed to the infections health condition and provide effective social distancing techniques to maintain the health of the individuals.

JP 6 610671 B2 discloses a security gate that is disposed at an entrance in a specific region of a building, and that controls entry of a user of the building into the specific region; provided with a body temperature sensor that measures the body temperature of a user who is passing through the security gate.

CN 111 392 526 A discloses an intelligent control device and an elevator management method including the steps that the intelligent control device determines the current status of an elevator, when it is determined that the elevator does not carry people, an ultraviolet radiator is controlled to turn on so that ultraviolet light kills germs inside the elevator.

### BRIEF SUMMARY

According to an aspect of the invention, a method for performing passenger grouping in an elevator system as recited in claim 1 is provided

Further embodiments include one or more sensors that include a thermal camera that is configured to obtain a user temperature.

Further embodiments include obtaining a first exposure rating based on a temperature from the thermal camera; obtaining a second exposure rating from a user device associated with the user; and combining the first exposure rating and the second exposure rating to calculate the final exposure rating.

Further embodiments include providing an indication to the user of an elevator car assignment or a rejection of the call request.

Further embodiments include assigning the user to an elevator car with one or more passengers responsive to the final exposure rating being less than a configurable threshold.

Further embodiments include determining the user has boarded the elevator car; re-calculating an aggregated exposure rating for the user and one or more passengers responsive to determining the user has boarded the elevator car; comparing the re-calculated aggregated exposure rating to an aggregated exposure rating threshold; and executing an action based at least in part on the comparison.

Further embodiments include allowing the elevator car to travel to its destination floor or inhibiting the elevator car from traveling to its destination floor.

Further embodiments include scheduling a sanitation service for the elevator car after the elevator car travels to its destination floor responsive to assigning the user an individual elevator car.

According to an aspect of the invention, a system for performing passenger grouping as recited in claim 9 is provided

Further embodiments include one or more sensors that include a thermal camera that is configured to obtain a user temperature.

Further embodiments include an elevator controller configured to obtain a first exposure rating based on a temperature from the thermal camera; obtain a second exposure rating from a user device associated with the user; and combine the first exposure rating and the second exposure rating to calculate the final exposure rating.

Further embodiments include an elevator control that is configured to provide an indication to the user of an elevator car assignment or a rejection of the call request.

Further embodiments include an elevator control that is configured to assign the user to an elevator car with one or more passengers responsive to the final exposure rating being less than a configurable threshold.

Further embodiments include an elevator control that is configured to determine the user has boarded the elevator car; re-calculate an aggregated exposure rating for the user and one or more passengers responsive to determining the user has boarded the elevator car; compare the re-calculated aggregated exposure rating to an aggregated exposure rating threshold; and execute an action based at least in part on the comparison.

Further embodiments include an elevator control that is configured to allow the elevator car to travel to its destination floor or inhibiting the elevator car from traveling to its destination floor.

Further embodiments include an elevator control that is configured to schedule a sanitation service for the elevator car after the elevator car travels to its destination floor responsive to assigning the user an individual elevator car.

Technical effects of embodiments of the present disclosure include grouping healthy passengers with other healthy passengers in an elevator and isolating passengers that may have been exposed to mitigate the spread of an infectious health risk. This encourages the ability of passengers to safely socially distance themselves from other passengers to reduce the spread of a health risk.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 depicts a block diagram of a passenger grouping system in accordance with one or more embodiments;
FIG. 3 depicts a flowchart of a method for performing passenger grouping in an elevator system in accordance with one or more embodiments; and
FIG. 4 depicts a flowchart of a method for re-checking exposure ratings of boarded passengers in accordance with one or more embodiments.

### DETAILED DESCRIPTION

Many buildings have started utilizing thermal sensing techniques to allow or disallow a person entrance into the building. In some instances, a person's body temperature can provide an indication of the health condition, and the thermal readings can be correlated to the potential health risks of the person. In many scenarios, thermal readings are the first line of defense and may not work well for all building configurations. In such scenarios, an elevator can act as a second line of defense to detect and inform the individual of their current health risk. The techniques described herein leverage the body temperature information and the contact tracing information to assign an exposure rating or level to the passenger to either individually assign the user to a separate elevator or safely group the user in an elevator with other healthy passengers. In one or more embodiments, the exposure rating can indicate the likelihood or probability that an individual has been exposed to an identified risk based on a number of factors that can be processed by third-party application server. One factor can include the user coming into physical contact or proximity of another individual who has been exposed to the identified risk. Another factor can include identifying other individuals that have been tested and positively identified as being contagious/infected with the identified risk. An additional factor that can be used to determine the exposure rating can include the location, distance, and duration one user is exposed to the contagious/infected individuals. In a non-limiting example, if a user is exposed to many other contagious individuals for a long period of time in a closed space, the exposure rating will be higher than a user that is exposed to minimal contagious individuals for a short period of time in an open space (outdoors). It should be understood that other factors can be used in generating the exposure rating. The techniques described herein provide the ability for individuals to socially distance themselves from other passengers.

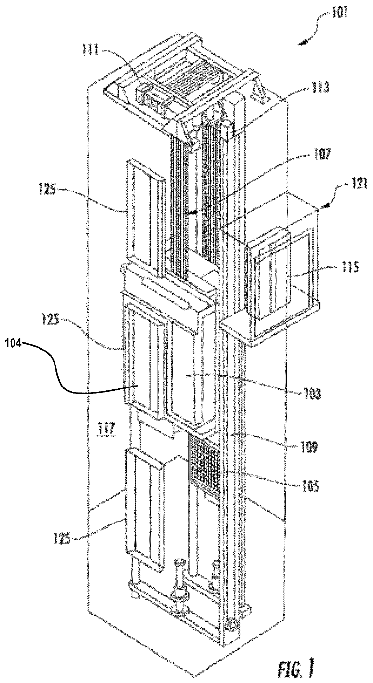

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using a self-propelled elevator cars (e.g., friction wheels or beam climbers). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1.

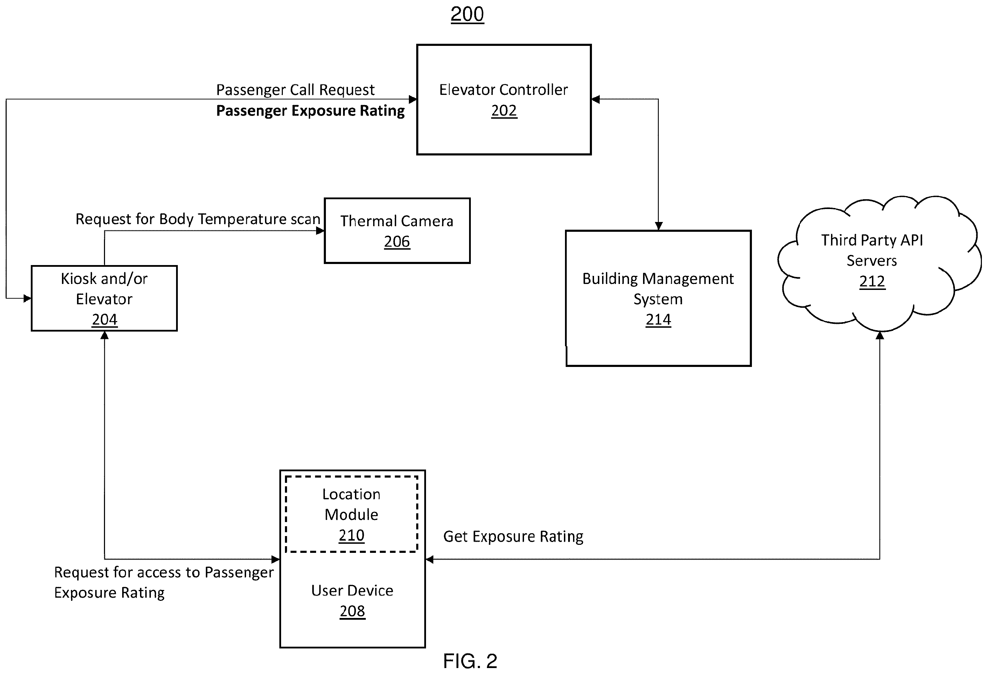

FIG. 2 depicts a block diagram of a passenger grouping system 200 for an elevator system in accordance with one or more embodiments. The elevator system can include but is not limited to the elevator system 101 shown with reference to FIG. 1. As shown, the passenger grouping system 200 can include the elevator controller 202 which can be the elevator controller 115 provided in FIG. 1. In one or more embodiments, the elevator controller 202 can be configured to exchange various types of information such as but not limited to call requests, exposure ratings, other communications, etc. with one or more components, systems, or devices.

One or more sensors may be coupled to the elevator controller 202 to obtain readings for performing passenger grouping as described herein. The one or more sensors can include but is not limited to a thermal camera 206. The thermal camera 206 is used to perform a temperature scan of a user to obtain a thermal reading of the scanned user. The thermal camera 206 is configured to transmit the thermal reading to the kiosk and/or elevator 204 and elevator controller 202.

In some embodiments, the thermal camera 206 can be installed in a location prior to entering the elevator car where the call request is placed. In addition, another thermal camera 206 can be installed in a location inside the elevator car. The thermal camera 206 in the elevator 204 can be used to obtain a thermal reading and is used to determine an overall exposure rating prior to closing the elevator doors and allowing the elevator car to travel to its destination.

A user device 208 associated with a user can be operably coupled to the elevator system for communicating with the elevator system. The user device 208 may be a mobile phone, smartphone, tablet, or other type of device. The user device 208 can include a user interface communicating with the elevator and elevator system. The user device 208 can transmit a call request for an elevator car to the elevator system. Also, the user device 208 can transmit various user condition information such as an exposure rating to the elevator system. In one or more embodiments, the user device 208 can exchange information through a third-party application program interface (API) to a third-party application server 212 over a network that is configured for performing contact tracing of exposed or potentially exposed individuals. The contact tracing information is used to generate an exposure rating. In one or more embodiments, the exposure rating can be on a scale of 1-5 or a scale of 1-10. It should be understood that a different scale can be used where the higher the value the higher the exposure risk and the lower the value the minimal the exposure risk.

In one or more embodiments, the user device 208 may include a location module 210 to identify the location of the user. For example, a global positioning system (GPS) or other type of indoor positioning system may be used to identify when the user has boarded the elevator car.

The passenger boarding system 200 can include a building management system 214 that is also coupled to the elevator controller 202. One or more sensors may be coupled to the building management system 214 to obtain temperature readings from the potential passengers prior to entering the elevator car. It should be understood that other types of information can be shared between the elevator controller 202 and the building management system 214. For example, the elevator controller 202 can transmit a signal to the building management system 214 to provide an alert or broadcast that the elevator car requires maintenance or other service For example, an alert can indicate that a particular elevator car requires sanitation after a passenger having an elevated exposure rating has traveled in the elevator car. The alert can be a haptic alert, audible alert, visual alert or any combination thereof.

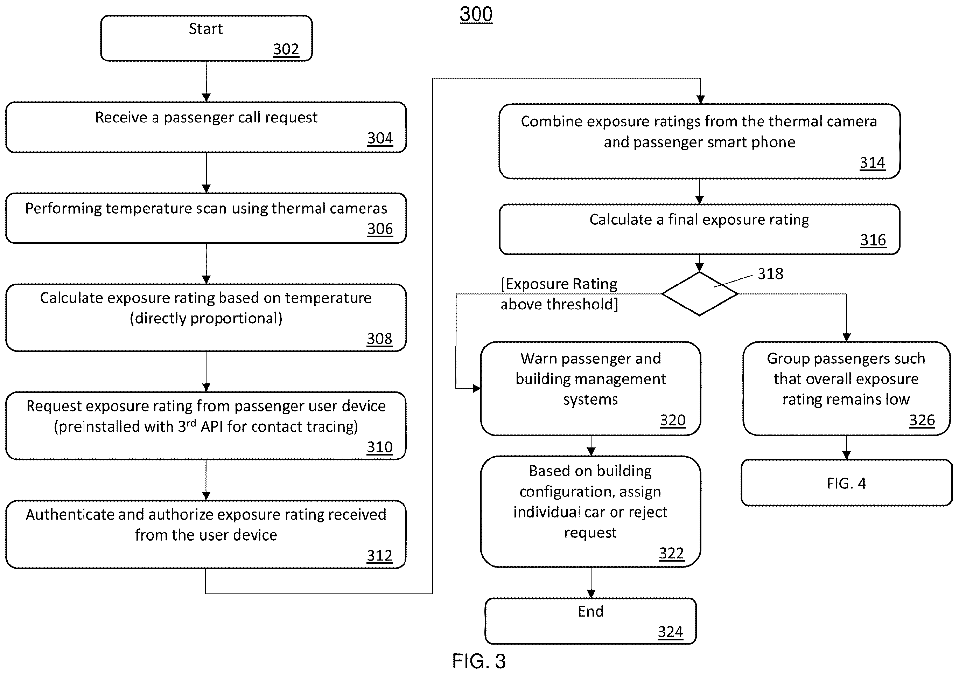

FIG. 3 depicts a flowchart of a method 300 for performing passenger grouping by the systems 100, 200 shown in FIGS. 1 and 2, respectively. It should be understood the method 300 is not limited by the flowchart shown in FIG. 3 but provides an illustrative example. The method 300 begins at block 302 and proceeds to block 304 which provides the elevator controller 202 receives a passenger call request. The call request may be transmitted from a user device 208 or a kiosk. Block 306 performs a temperature scan using thermal cameras 206.

In one or more embodiments, a request can be transmitted from the elevator controller 202 to a thermal camera 206 coupled to the elevator 204. The request can include a request to perform a body temperature scan of the user placing the call request. Responsive to the thermal camera 206 performing the scan, a response including a value representing the temperature scan is transmitted to the elevator controller 202 through the elevator 204. Block 308 calculates an exposure rating based on the temperature reading obtained from the thermal cameras 206 or sensors. The exposure rating obtained from the thermal cameras 206 is referred to as a first exposure rating. In one or more embodiments, the higher the temperature reading above the average user temperature, the higher the first exposure rating and the closer the user temperature is to the average user temperature the lower the exposure rating.

At block 310, the elevator controller 202 used in method 300 requests an exposure rating from the user device. The exposure rating obtained from the user device is referred to the second exposure rating. In one or more embodiments, a third-party API installed in the user device can be used for communicating with a third-party API server 212 and obtaining contact tracing information of others that may have been potentially exposed to a virus.

At block 312 the elevator controller 202 authenticates and authorizes the exposure rating received from the user device. Block 310 combines the exposure rating (first exposure rating) from the thermal camera 206 and the exposure rating (second exposure rating) from the user device is combined and block 314 calculates a final exposure rating. In one or more embodiments, the combination of the exposure rating from the thermal camera 206 and the user device 208 can include averaging the exposure ratings to calculate the final exposure rating.

The method 300 proceeds to decision block 318 where the elevator controller 202 either proceeds to block 320 or 326 based on comparing the final exposure rating calculated at block 316 to a configurable threshold for the final exposure rating. The user can be assigned to an individual car or group the passenger with passengers based on the comparison. Block 320 provides a notification to the passenger and the building management system the final exposure rating is above a configurable threshold. Block 322 can assign the individual car to the user. The method 300 can end at block 324.

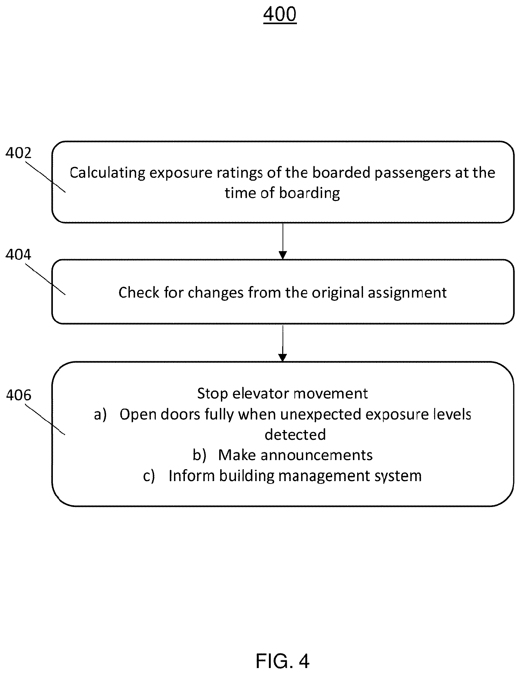

Otherwise, at decision block 318, if the final exposure rating is below the configurable threshold for the final exposure rating, the method 300 proceeds to block 326 which groups the user with other passengers such that the aggregate exposure rating remains low. In one or more embodiments, the users that are grouped together in an elevator car receive a notification of the assignment of the elevator car using their respective user devices. The method 300 can proceed to FIG. 4 which performs a re-checking process of the exposure rating of the passengers that have boarded the elevator car.

Now referring to FIG. 4, a flowchart of a method 400 for re-checking the passengers once the assigned passengers have boarded the elevator car in accordance with one or more embodiments. As shown in block 402, after each of the assigned passengers have boarded the elevator car, the exposure rating for the group of boarded passengers is calculated.

Block 404 determines whether any changes have been determined from the original assignment information. The elevator controller 202 can identify whether an unauthorized user has boarded the elevator car or if an assigned user's health condition has changed by comparing the location information of each user device that is present in the elevator car and determining the aggregated total exposure rating for the group. In addition, the system 200 can identify whether there is any other deviation from the measured information.

The passengers can be detected as having boarded the elevator car by a variety of techniques. For example, an unassigned user can be detected as having boarded the elevator car by using the location system of the user device.

Also, the expected passengers that are determined by the passenger assignment data can be compared to the location information for each user device that is detected in the elevator car. For example, the elevator controller 202 can assign passengers A, B, and C to an elevator car. The elevator controller 202 can poll each of the respective user devices to determine whether the location data indicates the users have boarded the elevator car. Subsequently, the passenger exposure rating for each of the users can be aggregated.

In one or more embodiments, the total exposure rating is calculated for all of the passengers that are currently onboard the assigned elevator car and compared to a total exposure rating threshold. In a non-limiting example, the total exposure rating threshold can be configured to the highest allowable score for each user multiplied by each number of assigned passengers that has boarded the elevator car. The comparison of the total exposure rating and the total exposure rating threshold is used to take an action.

Block 406 provides for stopping the elevator movement responsive to detecting a change in the original assignment/user condition for the passengers assigned to the elevator car using the elevator controller 202. In one or more embodiments, in addition to stopping the elevator car, the action can include a) opening the elevator doors fully when unexpected exposure levels are detected, b) making an announcement(s) to the passengers, c) informing building management system of the status of the passengers/elevator car, etc. The actions are not limited to those previously discussed but is only provided as an illustrative example.

The technical effects and benefits include enabling the passengers to be safely grouped with other healthy passengers in an elevator or isolating passengers in an elevator based on a calculated exposure rating. The accuracy of the techniques described herein is improved by leveraging data from a contact tracing application and correlating the user's current body temperature to the user's current exposure level.

As described above, embodiments can be in the form of processorimplemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The present disclosure is not to be seen as limited by the foregoing description, but is only limited by the scope of the appended claims.

## Claims

1. A method for performing passenger grouping, the method comprising:
receiving, at a controller (202), a call request placed by a user;
receiving, at the controller (202), user condition data for a user obtained using one or more sensors (206) operably coupled to the controller (202);
calculating, at the controller (202), a final exposure rating based at least in part on the user condition data, the final exposure rating indicating the likelihood or probability that an individual has been exposed to an identified risk; and
assigning, using the controller (202), the user to an elevator based at least in part on the final exposure rating,
the method being **characterised in that** responsive to the final exposure rating exceeding a configurable threshold, the user is assigned to an individual elevator car.

2. The method of claim 1, wherein the one or more sensors (206) comprise a thermal camera that is configured to obtain a user temperature.

3. The method of claim 2, wherein calculating the final exposure rating comprises:
obtaining a first exposure rating based on a temperature from the thermal camera;
obtaining a second exposure rating from a user device (208) associated with the user; and
combining the first exposure rating and the second exposure rating to calculate the final exposure rating.

4. The method of any preceding claim, further comprising providing an indication to the user of an elevator car assignment or a rejection of the call request.

5. The method of any preceding claim, responsive to the final exposure rating being less than a configurable threshold, the user is assigned to an elevator car with one or more passengers.

6. The method of any preceding claim, further comprising:
determining the user has boarded the elevator car;
re-calculating an aggregated exposure rating for the user and one or more passengers responsive to determining the user has boarded the elevator car;
comparing the re-calculated aggregated exposure rating to an aggregated exposure rating threshold; and
executing an action based at least in part on the comparison.

7. The method of claim 6, wherein the action comprises allowing the elevator car to travel to its destination floor or inhibiting the elevator car from traveling to its destination floor.

8. The method of any preceding claim, further comprising responsive to assigning the user an individual elevator car, scheduling a sanitation service for the elevator car after the elevator car travels to its destination floor.

9. A system (200) for performing passenger grouping, comprising:
a building management system (214);
one or more sensors (206) used to obtain user condition data;
an elevator and an elevator controller (202);
a user device (208) coupled to the elevator controller (202), wherein the elevator controller (202) is configured to:
receive a call request placed by a user;
receive user condition data for a user obtained using one or more sensors (206) operably coupled to the controller;
calculate a final exposure rating based at least in part on the user condition data, the final exposure rating indicating the likelihood or probability that an individual has been exposed to an identified risk; and
assign the user to an elevator based at least in part on the final exposure rating,
the system being **characterised in that** the elevator controller (202) is further configured to, responsive to the final exposure rating exceeding a configurable threshold, assign the user to an individual elevator car.

10. The system of claim 9, wherein the one or more sensors (206) comprise a thermal camera that is configured to obtain a user temperature and wherein, optionally, calculating the final exposure rating comprises the elevator controller (202) being further configured to:
obtain a first exposure rating based on a temperature from the thermal camera;
obtain a second exposure rating from a user device (208) associated with the user; and
combine the first exposure rating and the second exposure rating to calculate the final exposure rating.

11. The system of claim 9 or 10, wherein the elevator controller (202) is further configured to provide an indication to the user of an elevator car assignment or a rejection of the call request.

12. The system of claim 9, 10 or 11,
wherein, responsive to the final exposure rating being less than a configurable threshold, the user is assigned to an elevator car with one or more passengers.

13. The system of any of claims 9 to 12, wherein the elevator controller (202) is further configured to:
determine the user has boarded the elevator car;
re-calculate an aggregated exposure rating for the user and one or more passengers responsive to determining the user has boarded the elevator car;
compare the re-calculated aggregated exposure rating to an aggregated exposure rating threshold; and
execute an action based at least in part on the comparison.

14. The system of claim 13, wherein the action comprises allowing the elevator car to travel to its destination floor or inhibiting the elevator car from traveling to its destination floor.

15. The system of any of claims 9 to 14, wherein the elevator controller (202) is further configured to responsive to assigning the user an individual elevator car, schedule a sanitation service for the elevator car after the elevator car travels to its destination floor.

## Patentansprüche

1. Verfahren zum Durchführen einer Passagiergruppierung, wobei das Verfahren Folgendes umfasst:
Empfangen einer von einem Benutzer gestellten Rufanforderung an einer Steuerung (202);
Empfangen von Benutzerzustandsdaten für einen Benutzer, die unter Verwendung eines oder mehrerer Sensoren (206) erlangt werden, die an die Steuerung (202) wirkgekoppelt sind, an der Steuerung (202);
Berechnen einer endgültigen Risikobewertung zumindest teilweise basierend auf den Benutzerzustandsdaten an der Steuerung (202), wobei die endgültige Risikobewertung die Wahrscheinlichkeit oder Möglichkeit angibt, dass eine Person einem identifizierten Risiko ausgesetzt war; und
Zuweisen des Benutzers zu einem Aufzug unter Verwendung der Steuerung (202) zumindest teilweise basierend auf der endgültigen Risikobewertung,
wobei das Verfahren **dadurch gekennzeichnet ist, dass** dem Benutzer als Reaktion darauf, dass die endgültige Risikobewertung einen konfigurierbaren Schwellenwert überschreitet, eine individuelle Aufzugkabine zugewiesen wird.

2. Verfahren nach Anspruch 1, wobei der eine oder die mehreren Sensoren (206) eine Wärmekamera umfassen, die dazu konfiguriert ist, eine Temperatur des Benutzers zu erlangen.

3. Verfahren nach Anspruch 2, wobei das Berechnen der endgültigen Risikobewertung Folgendes umfasst:
Erlangen einer ersten Risikobewertung basierend auf einer Temperatur von der Wärmekamera;
Erlangen einer zweiten Risikobewertung von einer dem Benutzer zugeordneten Benutzervorrichtung (208); und
Kombinieren der ersten Risikobewertung und der zweiten Risikobewertung, um die endgültige Risikobewertung zu berechnen.

4. Verfahren nach einem der vorhergehenden Ansprüche, ferner umfassend Bereitstellen einer Angabe einer Aufzugkabinenzuweisung oder einer Ablehnung der Rufanforderung für den Benutzer.

5. Verfahren nach einem der vorhergehenden Ansprüche, wobei dem Benutzer als Reaktion darauf, dass die endgültige Risikobewertung unter einem konfigurierbaren Schwellenwert liegt, eine Aufzugkabine mit einem oder mehreren Passagieren zugewiesen wird.

6. Verfahren nach einem der vorhergehenden Ansprüche, ferner umfassend:
Bestimmen, dass der Benutzer die Aufzugkabine betreten hat;
Neuberechnen einer aggregierten Risikobewertung für den Benutzer und einen oder mehrere Passagiere als Reaktion auf das Bestimmen, dass der Benutzer die Aufzugkabine betreten hat;
Vergleichen der neu berechneten aggregierten Risikobewertung mit einem Schwellenwert für die aggregierte Risikobewertung; und
Ausführen einer Maßnahme zumindest teilweise basierend auf dem Vergleich.

7. Verfahren nach Anspruch 6, wobei die Maßnahme Ermöglichen der Fahrt der Aufzugkabine zu ihrem Zielstockwerk oder Verhindern der Fahrt der Aufzugkabine zu ihrem Zielstockwerk umfasst.

8. Verfahren nach einem der vorhergehenden Ansprüche, ferner umfassend Planen eines Hygienedienstes für die Aufzugkabine, nachdem die Aufzugkabine zu ihrem Zielstockwerk gefahren ist, als Reaktion auf das Zuweisen einer individuellen Aufzugkabine an den Benutzer.

9. System (200) zum Durchführen einer Passagiergruppierung, umfassend:
ein Gebäudemanagementsystem (214);
einen oder mehrere Sensoren (206), die verwendet werden, um Zustandsdaten eines Benutzers zu erlangen;
einen Aufzug und eine Aufzugsteuerung (202);
eine Benutzervorrichtung (208), die an die Aufzugsteuerung (202) gekoppelt ist, wobei die Aufzugsteuerung (202) zu Folgendem konfiguriert ist:
Empfangen einer von einem Benutzer gestellten Rufanforderung;
Empfangen von Benutzerzustandsdaten für einen Benutzer, die unter Verwendung eines oder mehrerer Sensoren (206) erlangt werden, die an die Steuerung wirkgekoppelt sind;
Berechnen einer endgültigen Risikobewertung zumindest teilweise basierend auf den Benutzerzustandsdaten, wobei die endgültige Risikobewertung die Wahrscheinlichkeit oder Möglichkeit angibt, dass eine Person einem identifizierten Risiko ausgesetzt war; und
Zuweisen des Benutzers zu einem Aufzug zumindest teilweise basierend auf der endgültigen Risikobewertung,
wobei das System **dadurch gekennzeichnet ist, dass** die Aufzugsteuerung (202) ferner dazu konfiguriert ist, dem Benutzer als Reaktion darauf, dass die endgültige Risikobewertung einen konfigurierbaren Schwellenwert überschreitet, eine individuelle Aufzugkabine zuzuweisen.

10. System nach Anspruch 9, wobei der eine oder die mehreren Sensoren (206) eine Wärmekamera umfassen, die dazu konfiguriert ist, die Temperatur eines Benutzers zu erlangen, und wobei das Berechnen der endgültigen Risikobewertung optional umfasst, dass die Aufzugsteuerung (202) ferner zu Folgendem konfiguriert ist:
Erlangen einer ersten Risikobewertung basierend auf einer Temperatur von der Wärmekamera;
Erlangen einer zweiten Risikobewertung von einer dem Benutzer zugeordneten Benutzervorrichtung (208); und
Kombinieren der ersten Risikobewertung und der zweiten Risikobewertung, um die endgültige Risikobewertung zu berechnen.

11. System nach Anspruch 9 oder 10, wobei die Aufzugsteuerung (202) ferner dazu konfiguriert ist, dem Benutzer eine Angabe einer Aufzugkabinenzuweisung oder einer Ablehnung der Rufanforderung bereitzustellen.

12. System nach Anspruch 9, 10 oder 11,
wobei dem Benutzer als Reaktion darauf, dass die endgültige Risikobewertung unter einem konfigurierbaren Schwellenwert liegt, eine Aufzugkabine mit einem oder mehreren Passagieren zugewiesen wird.

13. System nach einem der Ansprüche 9 bis 12, wobei die Aufzugsteuerung (202) ferner zu Folgendem konfiguriert ist:
Bestimmen, dass der Benutzer die Aufzugkabine betreten hat;
Neuberechnen einer aggregierten Risikobewertung für den Benutzer und einen oder mehrere Passagiere als Reaktion auf das Bestimmen, dass der Benutzer die Aufzugkabine betreten hat;
Vergleichen der neu berechneten aggregierten Risikobewertung mit einem Schwellenwert für die aggregierte Risikobewertung; und
Ausführen einer Maßnahme zumindest teilweise basierend auf dem Vergleich.

14. System nach Anspruch 13, wobei die Maßnahme Ermöglichen der Fahrt der Aufzugkabine zu ihrem Zielstockwerk oder Verhindern der Fahrt der Aufzugkabine zu ihrem Zielstockwerk umfasst.

15. System nach einem der Ansprüche 9 bis 14, wobei die Aufzugsteuerung (202) ferner dazu konfiguriert ist, als Reaktion auf das Zuweisen einer individuellen Aufzugkabine an den Benutzer einen Hygienedienst für die Aufzugkabine zu planen, nachdem die Aufzugkabine zu ihrem Zielstockwerk gefahren ist.

## Revendications

1. Procédé de réalisation d'un regroupement de passagers, le procédé comprenant :
la réception, au niveau d'un dispositif de commande (202), d'une demande d'appel placée par un utilisateur ;
la réception, au niveau du dispositif de commande (202), de données d'état d'utilisateur pour un utilisateur obtenues à l'aide d'un ou de plusieurs capteurs (206) couplés de manière opérationnelle au dispositif de commande (202) ;
le calcul, au niveau du dispositif de commande (202), d'une note d'exposition finale basée au moins en partie sur les données d'état d'utilisateur, la note d'exposition finale indiquant la vraisemblance ou la probabilité qu'un individu ait été exposé à un risque identifié ; et
l'affectation, à l'aide du dispositif de commande (202), de l'utilisateur à un ascenseur sur la base au moins en partie de la note d'exposition finale,
le procédé étant **caractérisé en ce qu'**en réponse à la note d'exposition finale dépassant un seuil configurable, l'utilisateur est affecté à une cabine d'ascenseur individuelle.

2. Procédé selon la revendication 1, dans lequel le ou les capteurs (206) comprennent une caméra thermique qui est configurée pour obtenir une température d'utilisateur.

3. Procédé selon la revendication 2, dans lequel le calcul de la note d'exposition finale comprend :
l'obtention d'une première note d'exposition basée sur une température provenant de la caméra thermique ;
l'obtention d'une seconde note d'exposition à partir d'un dispositif utilisateur (208) associé à l'utilisateur ; et
la combinaison de la première note d'exposition et de la seconde note d'exposition pour calculer la note d'exposition finale.

4. Procédé selon une quelconque revendication précédente, comprenant également la fourniture d'une indication à l'utilisateur d'une affectation de cabine d'ascenseur ou d'un rejet de la demande d'appel.

5. Procédé selon une quelconque revendication précédente, en réponse au fait que la note d'exposition finale est inférieure à un seuil configurable, l'utilisateur est affecté à une cabine d'ascenseur avec un ou plusieurs passagers.

6. Procédé selon une quelconque revendication précédente, comprenant également :
la détermination que l'utilisateur est monté dans la cabine d'ascenseur ;
le nouveau calcul d'une note d'exposition agrégée pour l'utilisateur et un ou plusieurs passagers en réponse à la détermination que l'utilisateur est monté dans la cabine d'ascenseur ;
la comparaison de la note d'exposition agrégée recalculée à un seuil de note d'exposition agrégée ; et
l'exécution d'une action basée au moins en partie sur la comparaison.

7. Procédé selon la revendication 6, dans lequel l'action comprend le fait de permettre à la cabine d'ascenseur de se déplacer jusqu'à son étage de destination ou d'empêcher la cabine d'ascenseur de se déplacer jusqu'à son étage de destination.

8. Procédé selon une quelconque revendication précédente, comprenant également, en réponse à l'affectation à l'utilisateur d'une cabine d'ascenseur individuelle, la planification d'un service d'assainissement pour la cabine d'ascenseur après que la cabine d'ascenseur se soit déplacée vers son étage de destination.

9. Système (200) permettant de réaliser un regroupement de passagers, comprenant :
un système de gestion de bâtiment (214) ;
un ou plusieurs capteurs (206) utilisés pour obtenir des données d'état d'utilisateur ;
un ascenseur et un dispositif de commande (202) d'ascenseur ;
un dispositif utilisateur (208) couplé au dispositif de commande (202) d'ascenseur, dans lequel le dispositif de commande (202) d'ascenseur est configuré pour :
recevoir une demande d'appel placée par un utilisateur ;
recevoir des données d'état d'utilisateur pour un utilisateur obtenues à l'aide d'un ou de plusieurs capteurs (206) couplés de manière opérationnelle au dispositif de commande ;
calculer une note d'exposition finale basée au moins en partie sur les données d'état d'utilisateur, la note d'exposition finale indiquant la vraisemblance ou la probabilité qu'un individu ait été exposé à un risque identifié ; et
affecter l'utilisateur à un ascenseur sur la base au moins en partie de la note d'exposition finale,
le système étant **caractérisé en ce que** le dispositif de commande (202) d'ascenseur est également configuré pour, en réponse à la note d'exposition finale dépassant un seuil configurable, affecter l'utilisateur à une cabine d'ascenseur individuelle.

10. Système selon la revendication 9, dans lequel le ou les capteurs (206) comprennent une caméra thermique qui est configurée pour obtenir une température d'utilisateur et dans lequel, éventuellement, le calcul de la note d'exposition finale comprend le dispositif de commande (202) d'ascenseur étant en outre configuré pour :
obtenir une première note d'exposition basée sur une température provenant de la caméra thermique ;
obtenir une seconde note d'exposition à partir d'un dispositif utilisateur (208) associé à l'utilisateur ; et
combiner la première note d'exposition et la seconde note d'exposition pour calculer la note d'exposition finale.

11. Système selon la revendication 9 ou 10, dans lequel le dispositif de commande (202) d'ascenseur est également configuré pour fournir une indication à l'utilisateur d'une affectation de cabine d'ascenseur ou d'un rejet de la demande d'appel.

12. Système selon la revendication 9, 10 ou 11,
dans lequel, en réponse au fait que la note d'exposition finale est inférieure à un seuil configurable, l'utilisateur est affecté à une cabine d'ascenseur avec un ou plusieurs passagers.

13. Système selon l'une quelconque des revendications 9 à 12, dans lequel le dispositif de commande (202) d'ascenseur est également configuré pour :
déterminer que l'utilisateur est monté dans la cabine d'ascenseur ;
recalculer une note d'exposition agrégée pour l'utilisateur et un ou plusieurs passagers en réponse à la détermination que l'utilisateur est monté dans la cabine d'ascenseur ;
comparer la note d'exposition agrégée recalculée à un seuil de note d'exposition agrégée ; et
exécuter une action basée au moins en partie sur la comparaison.

14. Système selon la revendication 13, dans lequel l'action comprend le fait de permettre à la cabine d'ascenseur de se déplacer jusqu'à son étage de destination ou d'empêcher la cabine d'ascenseur de se déplacer jusqu'à son étage de destination.

15. Système selon l'une quelconque des revendications 9 à 14, dans lequel le dispositif de commande (202) d'ascenseur est également configuré pour, en réponse à l'affectation à l'utilisateur d'une cabine d'ascenseur individuelle, planifier un service d'assainissement pour la cabine d'ascenseur après que la cabine d'ascenseur se soit déplacée vers son étage de destination.
